(19) Europäisches Patentamt
European Patent Office
Office européen des brevets

(11) EP 2 272 579 A1

(12) **EUROPÄISCHE PATENTANMELDUNG**

(43) Veröffentlichungstag:
**12.01.2011 Patentblatt 2011/02**

(51) Int Cl.:
**B01D 45/08** (2006.01)   **B01D 45/16** (2006.01)
**B01D 1/30** (2006.01)

(21) Anmeldenummer: **09008194.4**

(22) Anmeldetag: **22.06.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **Balcke-Dürr GmbH**
**40882 Ratingen (DE)**

(72) Erfinder: **Podhorsky, Miroslav, Dr.**
**40882 Ratingen (DE)**

(74) Vertreter: **Lang, Friedrich et al**
**Lang & Tomerius**
**Patentanwälte**
**Landsberger Strasse 300**
**80687 München (DE)**

Bemerkungen:
Geänderte Patentansprüche gemäss Regel 137(2) EPÜ.

(54) **Tropfenabscheider**

(57)   Vorliegende Erfindung betrifft einen Tropfenabscheider, der dazu vorgesehen ist, in einer Strömungsrichtung ($R_s$) durchströmt zu werden, mit wenigstens einem abschnittweise wellenförmigen Profil (2), an dem eine Mehrzahl von Fangtaschen (4) angeordnet sind, wobei das wellenförmige Profil (2) in Strömungsrichtung ($R_s$) aus alternierend gegeneinander kreisbogenförmig gekrümmten Profilelementen (6) und diese kreisbogenförmig gekrümmten Profilelemente (6) tangential verbindenden geraden Profilelementen (8) ausgebildet ist.

Fig. 3

EP 2 272 579 A1

**Beschreibung**

Die Erfindung betrifft einen Tropfenabscheider, der dazu vorgesehen ist, in einer Strömungsrichtung durchströmt zu werden, mit wenigstens einem abschnittsweise wellenförmigen Profil, an dem eine Mehrzahl von Fangtaschen angeordnet ist.

Solche Tropfenabscheider sind aus dem Stand der Technik bekannt und dienen dazu, Tropfen aus flüssigkeitsbeladenen Fluid- und insbesondere Gasströmungen abzuscheiden.

So beschreibt die DE 3 702 830 C1 einen Tropfenabscheider, bei dem zum Abscheiden von Tropfen aus einer Gasströmung eine Mehrzahl an parallel zueinander verlaufender wellenförmiger Profile verwendet wird, an deren Wänden die Tropfen abgeschieden werden. Um die Abscheidewirkung zu optimieren, sind die Wandstärken der jeweiligen wellenförmigen Profile so ausgebildet, dass sie sich in Strömungsrichtung teilweise verjüngen, teilweise verdicken, um resultierend daraus, die angrenzenden Kanalquerschnitte zu vergrößern bzw. zu verkleinern.

Eine solche Ausgestaltung eines Tropfenabscheiders stellt jedoch an dessen Herstellung hohe Anforderungen, die insbesondere in hohen Herstellungspreisen resultieren.

Auch die DE 42 14 094 C1 beschreibt einen Tropfenabscheider, bei dem durch eine Optimierung des Wellenprofilverlaufs eine Verbesserung des Wirkungsgrades erzielt werden soll. Dazu wird die Wellenform der Profile im Vergleich zu einer Sinuswelle derart abgewandelt, dass die Wendepunkte jeder Welle zumindest auf den Abscheideflächen einer Mittelpartie des Profils stromabwärts verlagert sind. Auch hier hat sich jedoch gezeigt, dass eine solche wellenförmige Profilausbildung hohe Produktionsanforderungen stellt, die zu hohen Herstellungskosten führen.

Aufgabe der Erfindung ist es folglich, die aus dem Stand der Technik bekannten Tropfenabscheider derart zu verbessern, dass sie bei einfacher und kostengünstiger Herstellbarkeit einen hohen Wirkungsgrad erzielen.

Diese Aufgabe wird durch einen Tropfenabscheider gemäß Patentanspruch 1 gelöst.

Insbesondere wird diese Aufgabe durch einen Tropfenabscheider gelöst, der dazu vorgesehen ist, in einer Strömungsrichtung durchströmt zu werden, mit wenigstens einem abschnittweise wellenförmigen Profil, an dem eine Mehrzahl von Fangtaschen angeordnet ist, wobei das wellenförmige Profil in Strömungsrichtung wenigstens abschnittsweise aus alternierend gegeneinander kreisbogenförmig gekrümmten Profilelementen und diese kreisbogenförmig gekrümmten Profilelemente tangential verbindenden geraden Profilelementen ausgebildet ist.

Ein wesentlicher Punkt des erfindungsgemäßen Tropfenabscheiders liegt darin, dass die wellenförmige Profilstruktur durch eine alternierende Anordnung kreisbogenförmiger und gerader Profilelemente erfolgt. Beide Profilelemente, sowohl die kreisbogenförmigen Profilelemente als auch die geraden Profilelemente, lassen sich einfach und kostengünstig herstellen und zum erfindungsgemäßen wellenförmigen Profil anordnen. Dabei hat sich herausgestellt, dass trotz der sehr einfachen Geometrien der Einzelkomponenten ein sehr guter Wirkungsgrad bei gleichzeitig kostengünstiger und einfacher Herstellbarkeit gewährleistet ist.

Vorzugsweise werden das wellenförmige Profil bzw. dessen Einzelkomponenten aus einem Metallblech hergestellt. Ein solches Metallblech kann auf einfache Art und Weise insbesondere in die kreisbogenförmig gekrümmten Profilelemente umgeformt werden. Bei der Verwendung eines Metallbleches zur Bildung des wellenförmigen Profils verläuft folglich die Skelettlinie des wellenförmigen Profils, also die Mittellinie des jeweiligen Metallblechs, parallel zu den Außenlinien des wellenförmigen Profils.

Bevorzugt entspricht das wellenförmige Profil folgender Dimensionierungsvorschrift:

$$2 \leq t/s \leq 3; \text{ und}$$
$$1,2 \leq t/r \leq 2; \text{ vorzugsweise}$$
$$t/s = 2,5 \text{ und } t/r = 1,6; \text{ wobei}$$

t = die halbe Wellenlänge des Profils in Strömungsrichtung;

r = der Krümmungsradius des kreisbogenförmig gekrümmten Profilelements; und

y = die Länge des geraden Profilelements.

In diesem Zusammenhang sei angemerkt, das im Umfang der Erfindung unter "einer Wellenlänge" des wellenförmigen Profils die Länge einer "Wellenperiode" in Strömungsrichtung verstanden wird; dies entspricht der Nomenklatur von harmonischen Schwingungen, wo von einer Periodendauer T oder Schwingungsdauer gesprochen wird, nämlich der Zeit, die verstreicht, während ein schwingungsfähiges System genau eine Schwingungsperiode durchläuft, d. h. nach der es sich wieder im selben Schwingungszustand befindet. Der Kehrwert der Periodendauer T ist die Frequenz f. Insofern entspricht die Wellenlänge hier also der imaginären Peiodendauer t einer "Voll-Schwingung" des wellenförmigen Profils.

Bei einer entsprechenden Wahl der Variablen t, r und y resultiert ein wellenförmiges Profil, das, wie im Folgenden noch detailliert gezeigt, einen optimalen Abscheidewirkungsgrad auch bei unterschiedlichen Tropfendurchmessern d aufweist.

Vorzugsweise erfüllt der Mittelpunktswinkel $\alpha$ der kreisbogenförmig gekrümmten Profilelemente die Dimensionierungsvorschrift $50° \leq \alpha \leq 90°$. Insbesondere Tropfen mit einem Gesamtdurchmesser von bis zu 25 $\mu$m lassen sich so u.a. unter Berücksichtigung der oben genannten Dimensionierungsvorschriften bei hohem Wirkungsgrad optimal abscheiden.

Vorteilhafterweise weist der Tropfenabscheider wenigstens zwei wenigstens abschnittsweise parallel zueinander verlaufende wellenförmige Profile auf, die der Dimensionierungsvorschrift 2 ≤ s/y ≤ 5, insbesondere s/y = 4,2 genügen, wobei s gleich der Abstand der zwei Profile zueinander senkrecht zur Strömungsrichtung ist. Die beiden parallel zueinander verlaufenden wellenförmigen Profile bilden dabei einen Strömungskanal den das Strömungsmedium unter Abscheidung der Flüssigkeitstropfen durchströmt.

Es ist zweckmäßig, dass das wellenförmige Profil eine Tiefe von mindestens 15 cm und höchstens 25 cm aufweist.

Vorzugsweise ist bei wenigstens einem wellenförmigen Profil wenigstens ein kreisbogenförmig gekrümmtes Profilelement einstückig mit wenigstens einem geraden Profilelement ausgebildet. Insbesondere aufgrund der sehr einfachen Herstellbarkeit der kreisbogenförmig gekrümmten Profile ist es hier möglich, einstückige Wellenprofile herzustellen, die ein optimales Strömungsverhalten und somit einen verbesserten Abscheidegrad aufweisen. Grundsätzlich ist es möglich, das gesamte wellenförmige Profil oder auch nur Teilbereiche dieses Profils aus einstückigen Profilbereichen herzustellen.

Vorzugsweise ist wenigstens eine Fangtasche im Bereich eines geraden Profilelementes ausgebildet. Dies verbessert die Abscheidewirkung und erleichtert die Herstellung.

Besonders günstig ist es, dass wenigstens eine Fangtasche ein Leitblech aufweist, das sich mit einem Deckbereich entgegen der Strömungsrichtung insbesondere parallel zum geraden Profilelement und insbesondere wenigstens teilweise von diesem beabstandet erstreckt. Ein solches Leitblech hat sich als besonders wirkungsvoll beim Abscheiden von Tropfen aus dem Strömungsmedium herausgestellt.

Eine vorteilhaft Weiterbildung besteht darin, dass das Leitblech einen Deckbereich aufweist, der eine insbesondere im Bereich des geraden Profilelementes angeordnete und im Wesentlichen in Strömungsrichtung weisende Hinterschneidung der Fangtasche um einen Wert x überdeckt, wobei 2 mm < x < 8 mm, insbesondere x = 5 mm gilt. Durch den Deckbereich des Leitbleches und die zwischen dem Deckbereich und dem insbesondere geraden Profilelement ausgebildete Hinterschneidungswandung ergibt sich folglich eine Fangtasche mit einem Labyrinthsystem, das eine sehr vorteilhafte Wirkung auf den Abscheidegrad des Tropfenabscheiders hat. Eine solche Dimensionierung des Deckbereiches bzw. eine solche im folgenden noch spezifizierte Ausgestaltung einer Fangtasche hat auch unabhängig von den zuvor genannten erfindungsgemäßen wellenförmigen Profilen einen positiven Effekt auf die Abscheidewirkung. Entsprechende Fangtaschen können auch bei anderen Abscheiderprofilen ihre vorteilhafte Anwendung finden.

Es erweist sich als zweckmäßig, dass das Leitblech mit einem Abzweigebereich aus einem stromabwärts zum geraden Profilelement angeordneten kreisbogenförmig gekrümmten Profilelement abzweigt, wobei der Abzweigebereich in den Deckbereich übergeht. Vorzugsweise sind dabei sowohl der Deckbereich als auch der Abzweigebereich als gerade verlaufende Bereiche ausgeführt, die durch einen Krümmungsbereich miteinander verbunden sind. Bei einer Anordnung des Deckbereichs im Bereich des geraden Profilelementes verlaufen dann der Deckbereich und das gerade Profilelement vorzugsweise parallel zueinander.

Vorzugsweise zweigt der Abzweigebereich tangential aus dem kreisbogenförmig gekrümmten Profilelement ab, wobei vorzugsweise das Abzweigen am Scheitelpunkt eines Wellenberges des wellenförmigen Profilelements erfolgt. Unter Wellenberg wird hier der Profilbereich verstanden, der, bei der Betrachtung eines mäandernden Strömungsverlaufs in einem durch zwei parallele wellenförmige Profile gebildeten Strömungskanal, auf der Kurveninnenseite angeordnet ist. Entsprechend wird unter einem Wellental der Bereich verstanden, der gegenüber, nämlich auf der Kurvenaußenseite des Strömungsverlaufes liegt.

Weitere Ausführungsformen der Erfindung ergeben sich aus den Unteransprüchen.

Im Folgenden wird die Erfindung anhand eines Ausführungsbeispiels beschrieben, das durch die beiliegenden Zeichnungen näher erläutert wird. Hierbei zeigen:

Fig. 1 und 2   einen Querschnitt durch eine schematisch dargestellte Ausführungsform eines Tropfenabscheiders;

Fig. 3   eine Detaildarstellung zweier wellenförmiger Profile des Tropfenabschei- ders aus Fig. 1;

Fig. 4   den geometrischen Zusammenhang zwischen kreisbogenförmig ge- krümmten Profilelementen und geraden Profilelementen der wellenför- migen Profile aus Fig. 3; und

Fig. 5   ein Diagramm in dem die Abhängigkeit des Abscheidegrades vom Trop- fendurchmesser d und dem Mittelpunktswinkel α des kreisbogenförmig gekrümmten Profilelementes bei einer Anströmgeschwindigkeit v von 10 m/s dargestellt ist.

Im Folgenden werden für gleiche und gleich wirkende Bauteile dieselben Bezugsziffern verwendet, wobei bisweilen zur Unterscheidung Hochindizes ihre Verwendung finden.

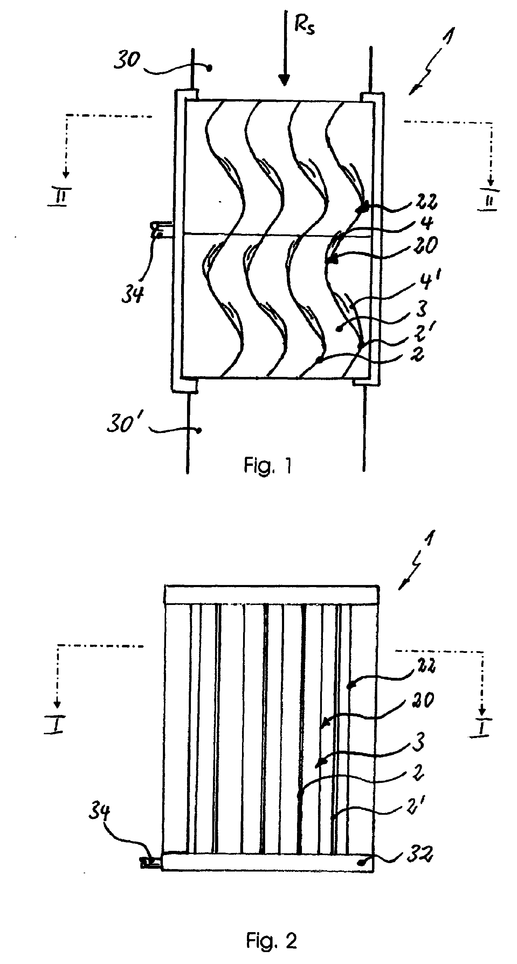

Die Fig. 1 und 2 zeigen schematisch eine Ausführungsform eines Tropfenabscheiders 1 in einem Querschnitt von oben (Fig. 1) und einem Querschnitt von der Seite (Fig. 2). Der Tropfenabscheider 1 dient dazu, Flüssigkeitstropfen aus einem Strömungsmedium und insbesondere einem Gas abzuscheiden, das auf einem Strömungskanal 30 in Strömungsrichtung $R_s$ den Tropfenabscheider 1 durchströmt.

Dieser weist dazu eine Mehrzahl an wellenförmigen Profilen 2 auf, die, jeweils parallel zueinander angeordnet, Strömungskanäle 3 bilden, auf denen das Strömungsmedium mäanderförmig durch den Tropfenabscheider 1 geführt wird.

Die Profilelemente 2 weisen zur Verbesserung der Abscheidewirkung Fangtaschen 4 auf, die bei dieser Ausführungsform jeweils zwischen einem durch das jeweilige Profilelement 2 gebildeten Wellental 22 und einem folgenden Wellenberg 20 angeordnet sind.

Aufgrund der mäandernden Form der durch die wellenförmigen Profile 2 gebildeten Strömungskanäle 3 schlagen sich die im durchströmenden Fluid mitgeführten Flüssigkeiten an den Profilen 2 und insbesondere im Bereich der Fangtaschen 4 ab. Sie wandern dann aufgrund Schwerkraft zum Bodenbereich 32 des Tropfenabscheiders 1, wo sie über einen entsprechenden Auslass 34 abführbar sind. Selbstverständlich sind mit den im Folgenden im Detail beschriebenen erfindungsgemäßen wellenförmigen Profilen 2 auch andere aus dem Stand der Technik bekannte Tropfenabscheider ausrüstbar.

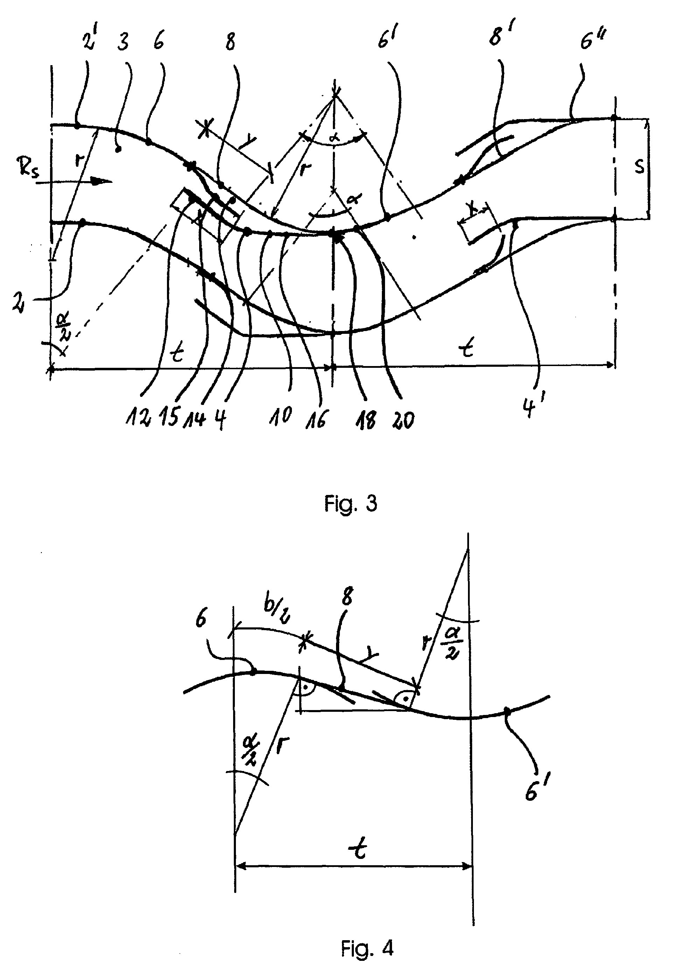

Die im Tropfenabscheider gemäß Fig. 1 und 2 verwendeten wellenförmigen Profile 2 sind in Fig. 3 und 4 im Detail dargestellt. Dabei zeigt Fig. 3 einen Ausschnitt zweier wellenförmiger Profile 2 im Umfang einer ganzen Welle der Länge 2t. Wie bereits oben erläutert wird im Umfang der Erfindung unter einer solchen "Welle" die Abfolge eines halben gekrümmten Profilelementes 6, eines geraden Profilelementes 8, eines ganzen entgegengesetzt gekrümmten Profilelementes 6', eines weiteren geraden Profilelementes 8' und eines weiteren halben wieder entgegengesetzt gekrümmten Profilelementes 6" verstanden.

Wie in Fig. 2 dargestellt, sind bei dieser Ausführungsform die wellenförmigen Profile 2 in einem Abstand s parallel zueinander angeordnet, so dass sie jeweils einen Strömungskanal 3 bilden, den das Strömungsmedium in Strömungsrichtung $R_s$ durchströmt. Dabei weicht das Strömungsmedium, geführt durch die wellenförmigen Profile 2 auf seinem Strömungspfad mäandernd von dieser Strömungsrichtung $R_s$ ab, wobei sich aufgrund der Massenträgheit Flüssigkeitstropfen an den Profilen 2 abscheiden.

Ein jedes kreisbogenförmig gekrümmte Profilelement 6 ist durch seinen jeweiligen Mittelpunktswinkel $\alpha$ und dem Kreisradius r definiert, so dass sich die Länge b des Kreisbogens eines jeden kreisbogenförmig gekrümmten Profilelementes 6 mit $b = \pi * r * \alpha/180°$ bestimmen lässt (siehe insbesondere Fig. 4).

Wie weiter in Fig. 3 dargestellt, schließt wenigstens in Teilabschnitten an ein kreisbogenförmig gekrümmtes Profilelement 6 jeweils ein gerades Profilelement 8 tangential an, wobei hinsichtlich der jeweiligen geometrischen Bedingungen folgende Dimensionierungsvorschriften erfüllt werden:

$$2 \leq t/s \leq 3;$$

$$1{,}2 \leq t/r \leq 2; \text{ und}$$

$$2 \leq s/y \leq 5; \text{ wobei}$$

t = die halbe Wellenlänge des Profils 2 in Strömungsrichtung $R_s$;

r = der Krümmungsradius des kreisbogenförmig gekrümmten Profilelements 6;

y = die Länge des geraden Profilelements 8; und

s = der Abstand der zwei Profile 2 zueinander senkrecht zur Strömungsrichtung $R_s$.

Aufgrund der in Fig. 4 im Detail angegebenen geometrischen Zusammenhänge zwischen den Mittelpunktswinkeln □ der kreisbogenförmig gekrümmten Profilelemente 6 und der Länge y der jeweils die beiden kreisbogenförmig gekrümmten Profilelemente 6 verbindenden geraden Profilelemente 8 ergibt sich zudem der Zusammenhang:

$$t = 2r * \sin(\alpha/2) + y * \cos(\alpha/2)$$

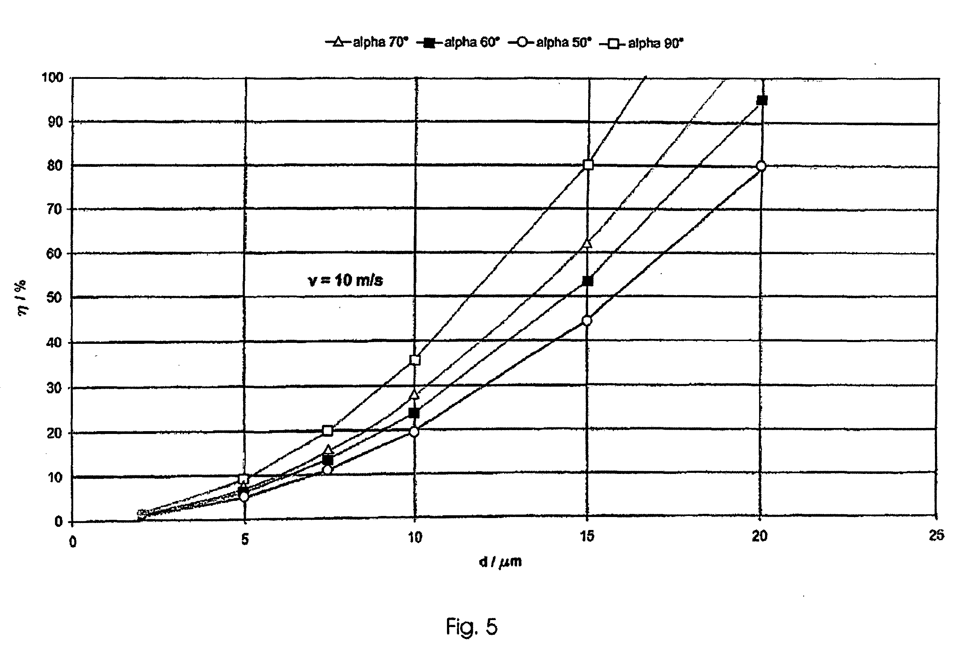

Mittels des in Fig. 5 dargestellten Diagramms zum Abscheidegrad des Tropfenabscheiders 1 kann unter Berücksichtigung der zuvor genannten Dimensionierungsvorschriften auf einfache Art und Weise der Mittelpunktswinkel $\alpha$ der kreisbogenförmig gekrümmten Profilelemente 6 festgelegt werden. Grundsätzlich folgt hier dieser Winkel $\alpha$ bzw. der Wirkungsgrad $\alpha$ des Tropfenabscheiders der Dimensionierungsvorschrift:

$$\eta = (\rho * r * d^2)/(18 * \mu) * \alpha/s * 100;$$

wobei

$\eta$ = der Wirkungsgrad des Tropfenabscheiders;
s = der Abstand der zwei Profile 2 senkrecht zur Strömungsrichtung $R_s$;
$\rho$ = 1.000 kg/m$^3$;
v = die Strömungsgeschwindigkeit, hier 10 m/s;
d = der Tropfendurchmesser der abzuscheidenden Tropfen;
$\mu$ = 14,4 * 10$^{-6}$ kg/(s*m);
$\alpha$ bzw. alpha = der Mittelpunktswinkel.

Unter Zugrundelegung der obigen Dimensionierungsvorschriften kann beispielsweise ein optimiertes wellenförmiges Profil 2 folgende Dimensionierungsvariablen aufweisen:

r = 30 mm;

t = 50 mm;

y = 5 mm;

s = 21 mm.

Wie eingangs bereits erwähnt, sind an den wellenförmigen Profilen 2 Fangtaschen 4 angeordnet, die bei dieser Ausführungsform insbesondere im Bereich der geraden Profilelemente 8 positioniert sind.

Jede Fangtasche 4 weist ein Leitblech 10 auf, das sich mit einem Deckbereich 12 entgegen der Strömungsrichtung $R_s$ und insbesondere parallel zum geraden Profilelement 8 und von diesem beabstandet erstreckt. Das Leitblech 10 weist darüber hinaus einen Abzweigebereich 16 auf, mit dem es aus dem stromunterseitig dem geraden Profilelement 8 folgenden kreisbogenförmig gekrümmten Profilbogenelement 6' abzweigt. Bei dieser Ausführungsform zweigt der Abzweigebereich 16 zudem tangential vom Scheitelpunkt 18 des kreisbogenförmig gekrümmten Profilelementes 6' ab. Wie eingangs bereits ebenfalls erläutert, kann dieser Bereich in direktem Zusammenhang mit dem Strömungskanal 3 als Wellenberg 20 bezeichnet werden.

Durch die entsprechende Anordnung des Leitbleches 10 umfassend einen tangential vom Scheitelpunkt 18 abzweigenden Abzweigebereich 16 und einen daran anschließenden Deckbereich 12, ergibt sich eine Fangtasche 4, die insbesondere unter Zugrundelegung der oben genannten Dimensionierungsvorschriften einen optimalen Wirkungsgrad des Tropfenabscheiders 1 sicherstellt.

Wie ebenfalls in Fig. 3 gezeigt, überdeckt dabei der Deckbereich 12 eine in Strömungsrichtung $R_s$ weisende Hinterschneidung 14 der Fangtasche 4, die durch eine Hinterschneidungswandung 15 gebildet wird. Diese Hinterschneidungswandung 15 zweigt bei dieser Ausführungsform am Übergangspunkt zwischen dem stromaufwärts angeordneten kreisbogenförmig gekrümmten Profilelement 6 und dem folgenden geraden Profilelement 8 ab. Eine bevorzugte Länge x des Deckbereichs 12 beträgt hier 2 bis 8 mm, insbesondere 5 mm, wobei sich ein Labyrinthsystem mit hohem Abscheidewirkungsgrad bildet.

**Patentansprüche**

1. Tropfenabscheider, der dazu vorgesehen ist, in einer Strömungsrichtung ($R_s$) durchströmt zu werden, mit wenigstens einem abschnittweise wellenförmigen Profil (2), an dem eine Mehrzahl von Fangtaschen (4) angeordnet ist,
**dadurch gekennzeichnet, dass**
das wellenförmige Profil (2) in Strömungsrichtung ($R_s$) wenigstens abschnittsweise aus alternierend gegeneinander kreisbogenförmig gekrümmten Profilelementen (6) und diese kreisbogenförmig gekrümmten Profilelemente (6) tangential verbindenden geraden Profilelementen (8) ausgebildet ist.

2. Tropfenabscheider nach Anspruch 1,
**dadurch gekennzeichnet, dass**
das wellenförmige Profil (2) folgender Dimensionierungsvorschrift genügt:

$2 \leq t/s \leq 3$; und
$1,2 \leq t/r \leq 2$; wobei

t = die halbe Wellenlänge des Profils (2) in Strömungsrichtung;
r = der Krümmungsradius des kreisbogenförmig gekrümmten Profilelements (6); und
y = die Länge des geraden Profilelements (8).

3. Tropfenabscheider nach einem der vorhergehenden Ansprüche, insbesondere Anspruch 2, **dadurch gekennzeichnet, dass**
das wellenförmige Profil (2) folgender Dimensionierungsvorschrift genügt:

$t/s = 2,5$; und
$t/r = 1,6$.

4. Tropfenabscheider nach einem der vorhergehenden Ansprüche,
**dadurch gekennzeichnet, dass**
der Mittelpunktswinkel $\alpha$ des kreisbogenförmig gekrümmten Profilelementes (6) folgende Dimensionierungsvorschrift erfüllt:

$50° \leq \alpha \leq 90°$.

5. Tropfenabscheider nach einem der vorhergehenden Ansprüche,
**dadurch gekennzeichnet, dass**
der Tropfenabscheider (1) wenigstens zwei wenigstens abschnittsweise parallel zueinander verlaufende wellenförmige Profile (2) aufweist und folgender Dimensionierungsvorschrift genügt:

$2 \leq s/y \leq 5$; wobei

s = der Abstand der zwei Profile (2) zueinander senkrecht zur Strömungsrichtung ($R_s$).

6. Tropfenabscheider nach einem der vorhergehenden Ansprüche, insbesondere Anspruch 5,
**dadurch gekennzeichnet, dass**
der Tropfenabscheider (1) folgender Dimensionie-

**7.** Tropfenabscheider nach einem der vorhergehenden Ansprüche,
**dadurch gekennzeichnet, dass**
bei wenigstens einem wellenförmigen Profil (2) wenigstens ein kreisbogenförmig gekrümmtes Profilelement (6) einstückig mit wenigstens einem geraden Profilelement (8) ausgebildet ist.

**8.** Tropfenabscheider nach einem der vorhergehenden Ansprüche,
**dadurch gekennzeichnet, dass**
wenigstens eine Fangtasche (4) im Bereich eines geraden Profilelementes (8) ausgebildet ist.

**9.** Tropfenabscheider nach einem der vorhergehenden Ansprüche,
**dadurch gekennzeichnet, dass**
wenigstens eine Fangtasche (4) ein Leitblech (10) aufweist, das sich mit einem Deckbereich (12) entgegen der Strömungsrichtung ($R_s$) insbesondere parallel zum geraden Profilelement (8) erstreckt.

**10.** Tropfenabscheider nach einem der vorhergehenden Ansprüche, insbesondere Anspruch 9,
**dadurch gekennzeichnet, dass**
das Leitblech (10) mit dem Deckbereich (12) eine im Bereich des geraden Profilelementes (8) angeordnete und im Wesentlichen in Strömungsrichtung ($R_s$) weisende Hinterschneidung (14) der Fangtasche (4) um einen Wert x überdeckt, wobei 2 mm < x < 8 mm, insbesondere x = 5 mm gilt.

**11.** Tropfenabscheider nach einem der vorhergehenden Ansprüche, insbesondere Anspruch 9 oder 10,
**dadurch gekennzeichnet, dass**
das Leitblech (10) mit einem Abzweigebereich (16) aus einem stromabwärts zum geraden Profilelement (8) angeordneten kreisbogenförmig gekrümmten Profilelement (6) abzweigt, wobei der Abzweigebereich (16) in den Deckbereich (12) übergeht.

**12.** Tropfenabscheider nach einem der vorhergehenden Ansprüche, insbesondere Anspruch 11,
**dadurch gekennzeichnet, dass**
der Abzweigebereich (16) tangential aus dem kreisbogenförmig gekrümmten Profilelement (6) abzweigt.

**13.** Tropfenabscheider nach einem der vorhergehenden Ansprüche, insbesondere Anspruch 11 oder 12,
**dadurch gekennzeichnet, dass**
der Abzweigebereich (16) am Scheitelpunkt (18) eines Wellenberges (20) des wellenförmigen Profils (2) abzweigt.

**14.** Tropfenabscheider nach einem der vorhergehenden Ansprüche, **dadurch gekennzeichnet, dass** das wellenförmige Profil (2) im Wesentlichen aus einem Metallblech besteht.

## Geänderte Patentansprüche gemäss Regel 137(2) EPÜ.

**1.** Tropfenabscheider (1), der wenigstens zwei wenigstens abschnittsweise parallel zueinander verlaufende wellenförmige Profile (2) aufweist, die einen Strömungskanal (3) bilden, der dazu vorgesehen ist, von einem Strömungsmedium entlang eines Strömungspfads in einer Durchströmungsrichtung ($R_s$) durchströmt zu werden,
mit wenigstens einem wellenförmigen Profil (2), das in der Durchströmungsrichtung ($R_s$) wenigstens abschnittsweise aus alternierend gegeneinander kreisbogenförmig gekrümmten Profilelementen (6) und diese tangential verbindenden geraden Profilelementen (8) ausgebildet ist, derart, dass sich an ein kreisbogenförmig gekrümmtes Profilelement (6) jeweils ein solches gerades Profilelement (8) tangential anschließt,
wobei an dem wellenförmigen Profil (2) eine Mehrzahl von Fangtaschen (4) angeordnet ist,
**dadurch gekennzeichnet,**
**dass** wenigstens eine Fangtasche (4) ein vom wellenförmigen Profil (2) in den Strömungskanal (3) abgezweigtes Leitblech (10) aufweist, das sich mit einem Deckbereich (12) im Wesentlichen entgegen der Durchströmungsrichtung ($R_s$) erstreckt, wobei der Deckbereich (12) des Leitblechs (10) eine im Wesentlichen in Durchströmungsrichtung ($R_s$) weisende Hinterschneidung (14) der Fangtasche (4), die durch eine Hinterschneidungswand (15) gebildet wird, überdeckt.

**2.** Tropfenabscheider (1) nach Anspruch 1,
**dadurch gekennzeichnet,**
**dass** die wenigstens eine Fangtasche (4) im Bereich eines geraden Profilelementes (8) ausgebildet ist.

**3.** Tropfenabscheider (1) nach Anspruch 2,
**dadurch gekennzeichnet,**
**dass** sich das Leitblech (10) mit seinem Deckbereich (12) parallel zum geraden Profilelement (8) erstreckt.

**4.** Tropfenabscheider (1) nach einem der vorhergehenden Ansprüche,
**dadurch gekennzeichnet,**
**dass** die Hinterschneidung (14) der Fangtasche (4) im Bereich eines geraden Profilelements (8) angeordnet ist und der Deckbereich (12) des Leitblechs (10) die Hinterschneidung (14) der Fangtasche (4) um einen Wert x überdeckt, wobei 2 mm < x < 8 mm

**5.** Tropfenabscheider (1) nach einem der vorhergehenden Ansprüche,
**dadurch gekennzeichnet,**
**dass** das Leitblech (10) mit einem Abzweigebereich (16) aus einem stromabwärts zum geraden Profilelement (8) angeordneten kreisbogenförmig gekrümmten Profilelement (6) abzweigt, wobei der Abzweigebereich (16) in den Deckbereich (12) übergeht.

**6.** Tropfenabscheider (1) nach Anspruch 5,
**dadurch gekennzeichnet,**
**dass** der Abzweigebereich (16) tangential aus dem kreisbogenförmig gekrümmten Profilelement (6) abzweigt.

**7.** Tropfenabscheider (1) nach Anspruch 5 oder 6,
**dadurch gekennzeichnet,**
**dass** der Abzweigebereich (16) am Scheitelpunkt (18) eines Wellenberges (20) des wellenförmigen Profils (2) abzweigt.

**8.** Tropfenabscheider (1) nach einem der vorhergehenden Ansprüche,
**dadurch gekennzeichnet,**
**dass** bei wenigstens einem wellenförmigen Profil (2) wenigstens ein kreisbogenförmig gekrümmtes Profilelement (6) einstückig mit wenigstens einem geraden Profilelement (8) ausgebildet ist.

**9.** Tropfenabscheider (1) nach einem der vorhergehenden Ansprüche,
**dadurch gekennzeichnet,**
**dass** ein wellenförmiges Profil (2) aus einem Metallblech besteht.

**10.** Tropfenabscheider (1) nach einem der vorhergehenden Ansprüche,
**dadurch gekennzeichnet,**
**dass** die wenigstens zwei wenigstens abschnittsweise parallel zueinander verlaufenden wellenförmigen Profile (2) bei gleichem Krümmungsradius r der alternierend gegeneinander kreisbogenförmig gekrümmten Profilelemente (6) folgender Dimensionierungsvorschrift genügen:

$$2 < t/s < 3;$$

und

$$1,2 < t/r < 2;$$

mit:

t = halbe Wellenlängen der wellenförmigen Profile (2) in Durchströmungsrichtung ($R_s$);
s = Abstand der wenigstens abschnittsweise parallel zueinander verlaufenden, wellenförmigen Profile (2) zueinander, senkrecht zur Durchströmungsrichtung ($R_s$); und
r = der Krümmungsradius der kreisbogenförmig gekrümmten Profilelemente (6).

**11.** Tropfenabscheider (1) nach Anspruch 10,
**dadurch gekennzeichnet,**
**dass** die wenigstens zwei wenigstens abschnittsweise parallel zueinander verlaufenden wellenförmigen Profile (2) folgender Dimensionierungsvorschrift genügen:

$$t/s = 2,5;$$

und

$$t/r = 1,6.$$

**12.** Tropfenabscheider (1) nach Anspruch 10 oder 11,
**dadurch gekennzeichnet,**
**dass** die kreisbogenförmig gekrümmten Profilelemente (6) der wellenförmigen Profile (2) einen Mittelpunktswinkel $\alpha$ aufweisen, der folgende Dimensionierungsvorschrift erfüllt:

$$50° \leq \alpha \leq 90°.$$

**13.** Tropfenabscheider (1) nach einem der Ansprüche 10 bis 12,
**dadurch gekennzeichnet,**
**dass** die wenigstens zwei wenigstens abschnittsweise parallel zueinander verlaufenden wellenförmigen Profile (2) bei gleicher Länge y der geraden Profilelemente (8) folgender Dimensionierungsvorschrift genügen:

$$2 \leq s/y \leq 5;$$

mit:
s = Abstand der wenigstens abschnittsweise parallel zueinander verlaufenden, wellenförmigen Profile (2) zueinander, senkrecht zur Durchströmungsrichtung ($R_s$); und y = Länge der geraden Profilelemente (8).

**14.** Tropfenabscheider (1) nach Anspruch 13,
**dadurch gekennzeichnet,**

**dass** dieser folgender Dimensionierungsvorschrift genügt:

$$s/y = 4{,}2.$$

Fig. 1

Fig. 2

Fig. 3

Fig. 4

Fig. 5

EP 2 272 579 A1

**Europäisches Patentamt**

**European Patent Office**

**Office européen des brevets**

# EUROPÄISCHER RECHERCHENBERICHT

Nummer der Anmeldung

EP 09 00 8194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 518 221 A (WURZ DIETER [DE]) 16. Dezember 1992 (1992-12-16) Typ 6* Abbildung 1 * ----- | 1 | INV. B01D45/08 B01D45/16 B01D1/30 |
| X | DE 26 19 688 A1 (REGEHR ULRICH) 1. Dezember 1977 (1977-12-01) | 1-4,6-9, 11-14 | |
| Y | * Abbildungen 1-4 * ----- | 5 | |
| X | GB 1 408 928 A (REGEHR U) 8. Oktober 1975 (1975-10-08) * Abbildungen 2,3 * ----- | 1 | |
| Y | WO 01/39865 A (LEIV EIRIKSSON NYFOTECK AS [NO]; KOLDERUP HERMAN [NO]) 7. Juni 2001 (2001-06-07) | 5 | |
| A | * Abbildung 5 * ----- | 1 | |
| A | GB 2 199 260 A (BURGESS MANNING LIMITED BURGESS MANNING LIMITED [GB]) 6. Juli 1988 (1988-07-06) * Abbildung 3 * ----- | 1 | |
| A | DE 36 27 555 C1 (WURZ DIETER PROF DR-ING) 6. August 1987 (1987-08-06) * Abbildung 1 * ----- | 1 | |

RECHERCHIERTE SACHGEBIETE (IPC)

B01D

Der vorliegende Recherchenbericht wurde für alle Patentansprüche erstellt

| Recherchenort | Abschlußdatum der Recherche | Prüfer |
|---|---|---|
| München | 30. November 2009 | Hoffmann, Alexander |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 09 00 8194

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-11-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 0518221 | A | 16-12-1992 | DE | 4119216 A1 | 24-12-1992 |
| | | | US | 5268011 A | 07-12-1993 |
| DE 2619688 | A1 | 01-12-1977 | BR | 7702848 A | 10-01-1978 |
| | | | US | 4141706 A | 27-02-1979 |
| GB 1408928 | A | 08-10-1975 | BE | 789064 A1 | 15-01-1973 |
| | | | CA | 983412 A1 | 10-02-1976 |
| | | | CH | 554696 A | 15-10-1974 |
| | | | DD | 99102 A5 | 20-07-1973 |
| | | | DE | 2148079 A1 | 05-04-1973 |
| | | | ES | 407029 A1 | 01-11-1975 |
| | | | FR | 2154580 A1 | 11-05-1973 |
| | | | IT | 967840 B | 11-03-1974 |
| | | | JP | 48041359 A | 16-06-1973 |
| | | | NL | 7213099 A | 29-03-1973 |
| | | | US | 3849095 A | 19-11-1974 |
| | | | ZA | 7206552 A | 27-06-1973 |
| WO 0139865 | A | 07-06-2001 | AU | 777868 B2 | 04-11-2004 |
| | | | AU | 1560501 A | 12-06-2001 |
| | | | CA | 2392745 A1 | 07-06-2001 |
| | | | EP | 1246683 A1 | 09-10-2002 |
| | | | NO | 995867 A | 05-06-2001 |
| GB 2199260 | A | 06-07-1988 | KEINE | | |
| DE 3627555 | C1 | 06-08-1987 | CA | 1313626 C | 16-02-1993 |
| | | | EP | 0263930 A1 | 20-04-1988 |
| | | | GR | 3001211 T3 | 30-07-1992 |
| | | | JP | 2721159 B2 | 04-03-1998 |
| | | | JP | 63051915 A | 05-03-1988 |
| | | | US | 4802901 A | 07-02-1989 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3702830 C1
- DE 4214094 C1